Europäisches Patentamt

European Patent Office

Office européen des brevets

(19)

(11) **EP 1 380 116 B1**

(12) **EUROPEAN PATENT SPECIFICATION**

(45) Date of publication and mention
of the grant of the patent:
**22.06.2005 Bulletin 2005/25**

(51) Int Cl.⁷: $H04B\ 1/10$, $H04B\ 1/12$, $H04L\ 25/03$

(21) Application number: **02721703.3**

(22) Date of filing: **09.04.2002**

(86) International application number:
**PCT/US2002/011202**

(87) International publication number:
**WO 2002/084892 (24.10.2002 Gazette 2002/43)**

(54) **METHODS AND SYSTEMS FOR REDUCING INTERFERENCE USING CO-CHANNEL INTERFERENCE MAPPING**

VERFAHREN UND SYSTEME ZUR INTERFERENZREDUKTION MITTELS GLEICHKANALSTÖRUNGSKATEGORIZIERUNG

PROCEDES ET SYSTEMES DE REDUCTION D'INTERFERENCE AU MOYEN D'UNE CARTOGRAPHIE D'INTERFERENCE ENTRE VOIES

(84) Designated Contracting States:
**AT BE CH CY DE DK ES FI FR GB GR IE IT LI LU MC NL PT SE TR**

(30) Priority: **11.04.2001 US 832601**

(43) Date of publication of application:
**14.01.2004 Bulletin 2004/03**

(73) Proprietor: **Ericsson Inc.**
**Plano, TX 75024 (US)**

(72) Inventors:
• **MOLNAR, Karl, James**
**Cary, NC 27513 (US)**

• **DENT, Paul, W.**
**Pittsboro, NC 27312 (US)**

(74) Representative:
**Holmberg, Nils Anders Patrik et al**
**Dr Ludwig Brann Patentbyra AB**
**P.O. Box 17192**
**104 62 Stockholm (SE)**

(56) References cited:
**EP-A- 0 637 139          WO-A-00/41317**
**WO-A-98/38750          WO-A-99/01946**

EP 1 380 116 B1

## EP 1 380 116 B1

**Description**

## BACKGROUND OF THE INVENTION

The present invention relates to digital communications methods and apparatus, and more particularly, to the reception of co-channel signals in a digital communications system.

Bandwidth is a valuable resource in wired and wireless communication systems.

Frequency may be reused in a wireless network in order to reduce cost. A signal occupying the same bandwidth as a desired signal, referred to herein as a co-channel signal, may cause interference and may severely limit the performance of a conventional single-user receiver.

The effects of co-channel interference can be reduced using a variety of techniques. Pursuant to one such approach, multiple antennas may be provided on a radiotelephone (such 5 as, for example, a cellular telephone base station), and co-channel interference may be cancelled by modeling the interference as a colored noise process across the antennas. Likewise, the use of joint equalization-interference cancellation at a receiver via linear filtering and decision feedback or joint maximum likelihood sequence estimation ("MLSE") of co-channel signals may also be used to reduce co-channel interference. See, e.g., Ranta et al., "Co-Channel Interference Canceling Receiverfor TDAIA Mobile Systems". IEEE ICC Proceedings, Feb. 1995, pp. 17-21; Yoshino et al., "Interference Canceling Equalizer (ICE) for Mobile Radio Communication". IEEE Trans. Vehicular Tech., Vol. 46, No. 4, Nov. 1997, pp. 849

WO 00/41317 discloses a method for demodulating a signal and reducing co-channel interference in a receiver in a TDMA radio system. The receiver searches for the most interfering signal and forms a signal estimate of the desired signal by means of a predetermined sequence of the desired signal and interference signal. The receiver further forms a co-channel estimate by means of the predetermined sequences of the desired signal and interfering signal. The receiver forms then two residual signals representing the difference between the signal estimate and the received signal and the difference between the received signal and the co-channel signal estimate. The receiver compares the two residual signals in order to detect the received signal.

## SUMMARY OF THE INVENTION

According to embodiments of the present invention as defined in the independent claims, methods for demodulating a received signal are provided. Pursuant to these methods, an interference map containing information regarding a plurality of candidate co-channel interference sources is provided. The information in the interference map regarding the plurality of candidate interference sources may be used to identify any of the candidate co-channel interference sources that could comprise a dominant interference source. The received signal may then be demodulated in a manner that cancels at least part of the contribution of any identified dominant interference source by using the information regarding any, such interference source contained in the interference map. Receivers for implementing these methods are also provided.

The methods and systems of the present invention may be used in a wide variety of wireless communications systems to reduce the effects of co-channel interference on the demodulation of a desired signal. Use of these methods and systems may be particularly advantageous in wireless communications systems in which multiple co-channel interference sources are often presem, as they may facilitate identifying which co-channel interference -) source is the dominant interference source with respect to each burst of the received signal, as well as potentially canceling out at least part of the contribution of that dominant interference source to the received signal.

## BRIEF DESCRIPTION OF THE DRAWINGS

**Figure 1** is a schematic diagram depicting a conventional cellular radiotelephone communications system.
**Figure 2** is a block diagram of a wireless terminal according to embodiments of the present invention.
**Figure 3** is a block diagram illustrating an interference mapping system according to embodiments of the present invention.
**Figure 4** is a flow chart illustrating operations for demodulating a received signal according to embodiments of the present invention.
**Figure 5** is a flow chart illustrating operations for demodulating a received signal according to further embodiments of the present invention.
**Figure 6** is a block diagram illustrating an exemplary interference mapping system according to embodiments of the present invention.
**Figure 7** is a table illustrating parameters stored in an exemplary interference map.

DETAILED DESCRIPTION OF PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

Co-pending United States Patent Application Serial No. 09/143,821 filed August 31, 1998 and entitled Methods and Systems for Reducing Co-Channel Interference Using Multiple Timings for a Received Signal, describes joint demodulation techniques in which co-channel interference may be reduced by hypothesizing an interfering signal as part of an MLSE process to cancel the interfering signal during demodulation of the desired carrier. Copending United States Patent Application Serial No. 09/660,050, filed September 12, 2000 and entitled Apparatus for and Method of Adopting a Radio Receiver Using Control Functions, describes methods and systems for adaptively controlling joint demodulation such that joint demodulation is only used in situations where it appears that the received signal includes co-channel interference from a dominant interference source, and conventional demodulation is otherwise employed. The present invention arises, in part, from the realization that joint demodulation performance may degrade in situations where fading, shadowing or other effects cause the interference source that is dominant to change over time. Thus, pursuant to the teachings of the present invention, an interference map may be provided in which estimated parameters associated with a plurality of candidate co-channel interference sources are stored, and a received signal may be evaluated to estimate which interference source is dominant with respect to any given received sample. The parameters stored in the interference map associated with the identified interference source, if any, may then be used in jointly demodulating the received signal.

The discussion herein relates to wireless communications systems, in which one or more antennas radiate electromagnetic waveforms generated by a transmitter located, for example, in a mobile terminal or base station. The waveforms are propagated in a radio propagation environment, and are received by a receiver via one or more antennas. It will be understood that, although the description herein refers to a radio environment, apparatus and methods are applicable to other environments, such as wireline communications and recovery of data from magnetic storage media.

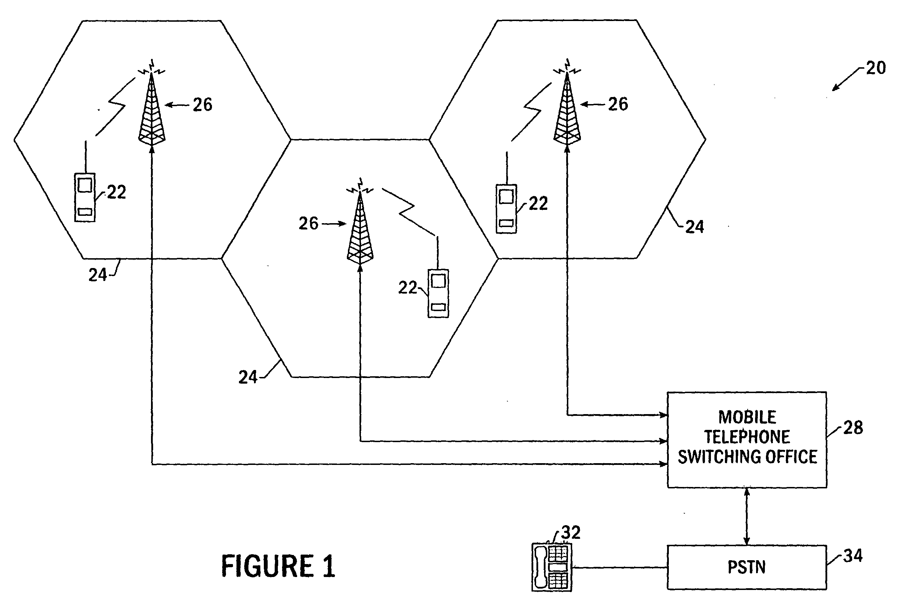

**Figure 1** illustrates a typical terrestrial cellular radiotelephone communication system **20** in which the apparatus and methods of the present invention may be utilized. The cellular radiotelephone system **20** may include one or more radiotelephones "(terminals)" **22,** communicating with a plurality of cells **24** served by base stations **26** and a mobile telephone switching office (MTSO) **28.** Although only three cells **24** are shown in **Figure 1,** a typical cellular network may include hundreds of cells, may include more than one MTSO, and may serve thousands of radiotelephones.

The cells **24** generally serve as nodes in the communication system **20,** from which links are established between radiotelephones **22** and the MTSO **28,** by way of the base stations **26** serving the cells **24.** Each cell **24** typically has allocated to it one or more dedicated control channels and one or more traffic channels. A control channel is a dedicated channel used for transmitting cell identification and paging information. The traffic channels carry the voice and data information. Through the cellular network **20,** a duplex radio communication link may be effected between two mobile terminals **22** or between a mobile terminal **22** and a landline telephone user **32** through a public switched telephone network (PSTN) **34.** The function of a base station **26** is to handle radio communication between a cell 24 and mobile terminals **22.** In this capacity, a base station **26** functions as a relay station for data and voice signals.

The present invention is generally described herein in the context of a "communications terminal" or "terminal." As used herein, the term "terminal" may include, among other things, a cellular radiotelephone with or without a multi-line display; a hardwired telephone, a computer or other processing device that includes a modem or other communications device, a Personal Communications System (PCS) terminal that may combine a cellular radiotelephone with data processing, facsimile and data communications capabilities; and a Personal Data Assistant ("PDA") that can include a radiotelephone, pager, Internet/intranet access, Web browser, organizer, calendar and/or a global positioning system (GPS) receiver.

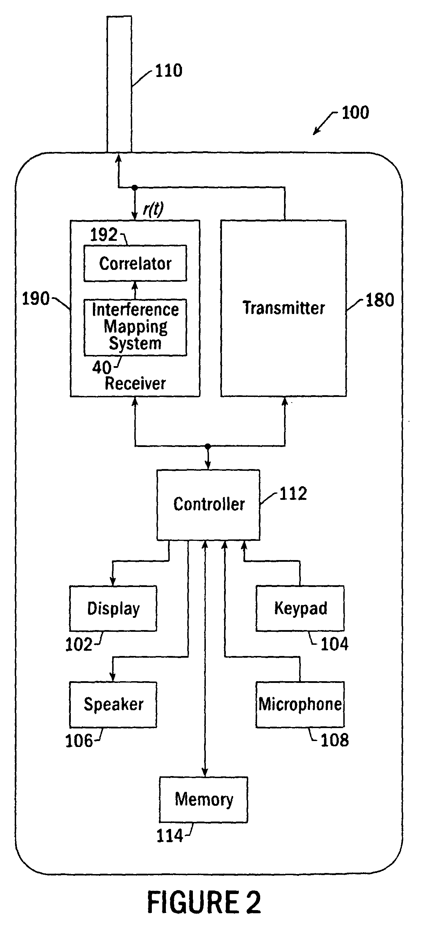

**Figure 2** illustrates an exemplary wireless terminal **100** according to embodiments of the present invention. The terminal **100** includes a controller **112,** such as a microprocessor, microcontroller or similar data processing device, that executes program instructions stored in a memory **114,** such as a dynamic random access memory (DRAM), electrically erasable programmable read only memory (EEPROM) or other storage device. The controller **112** is operatively associated with user interface components such as a display **102,** keypad **104,** speaker **106,** and microphone **108,** operations of which are known to those of skill in the art and will not be further discussed herein. The controller **112** also controls and/or monitors operations of a radio transmitter **180** that, for example, transmits radio frequency (RF) signals in a communications medium via an antenna **110.**

The controller **112** is also operatively associated with a receiver **190.** In the wireless terminal **100** of **Figure**

**2,** the receiver includes a correlation unit **192** that is operative to correlate a signal *r(t)* received via the antenna **110** with a particular modulation sequence, for example, a synchronization, scrambling or spreading sequence. The receiver **190** further includes an interference mapping system **40,** which may be used (as described herein) to store information regarding co-channel interference sources to facilitate partial cancellation of co-channel interference during demodulation of the received signal *r(t)*.

It will be appreciated that the receiver **190** and other-components of the terminal **100** may be implemented using a variety of hardware and software. For example, portions of the receiver **190,** including the correlation unit **192** and interference mapping system **40** may be implemented using special-purpose hardware, such as an application specific integrated circuit (ASIC) and programmable logic devices such as gate arrays, and/or software or firmware running on a computing device such as a microprocessor, microcontroller or digital signal processor (DSP). It also will be appreciated that although functions of the receiver **190** may be integrated in a single device, such as a single ASIC, they may also be distributed among several devices. Further, it will be appreciated that the receiver could be implemented at a base station or other terminal as well as in the mobile terminal **100** depicted in **Figure 2**.

It will be appreciated by those of skill in the art in light of the present disclosure that the methods and systems of the present invention may be particularly advantageous in wireless communications systems in which a relatively small number of potentially dominant interferers may be present at any given time. In certain wireless communications systems, such as cellular communications systems operating under the IS-136 standard, the carrier frequencies are generally partitioned into a frequency reuse plan to facilitate avoiding strong co-channel interference. Spatial techniques such as sectorization (*i.e.*, assigning adjacent base stations to different frequency bands) and fixed beamforming (*i.e.*, shaping the antenna pattern of base station antennas to reduce the co-channel interference the base station causes in nearby cells) may also be used to minimize or avoid the effects of co-channel interference. Thus, systems which use some or all of the above-described techniques may only have a limited number of co-channel interference sources that a terminal **100** seeking to receive a desired signal must address.

As noted above, an additional method for reducing the effects of co-channel interference is to jointly demodulate the desired signal and the contribution to the received signal of a dominant co-channel interference source. Such joint demodulation may be used to estimate the contribution of the dominant co-channel interference source to the received signal, so that this contribution may be canceled out (*i.e.*, removed) during demodulation of the desired signal. However, in some wireless communications systems, such as certain cellular telephone systems, two or more potentially dominant interference sources may be present at any given time. In such systems, it has been found that two-user joint demodulation performance may degrade significantly, in certain circumstances, from the performance achievable in the single interferer case. Moreover, in systems in which multiple strong co-channel interference sources are present, it has been found that signal fading and/or shadowing effects may cause the interference source dominating the carrier-to-interference ("C/I") ratio for a desired signal to change with time, such that, for significant periods of time, only one of the interference sources may be dominant. Shadowing refers to the long-term affect on signal strength which may result from the impact of mountains, buildings and/or other geographic features on the signal received from a particular source. Fading is a more short-term effect, and may primarily depend on the Doppler velocity of the signal and the path from the transmitter to the receiver.

Additionally, the interference environment may change over time due to changes in the interfering signals that occur when interference sources intermittently transmit, change transmit power levels, and/or start or stop transmitting. Consequently, which interference source is dominant may, in some situations, change on a slot-to-slot basis. Consequently, conventional joint demodulation processes may not perform optimally in these interference environments, as they typically rely on estimated interference source parameters from previous slots which may no longer be accurate. It will be appreciated that the effects of shadowing and fading may differ for different interference sources. As in many systems either the interference sources and/or the wireless terminal **100** move over time, the changes in the received signal caused by the variable shadowing and fading effects may be used to assist in distinguishing multiple potential dominant interference sources from each other, so that information regarding at least some of the interference sources may be tracked in an interference map. This interference map may include stored estimated parameters associated with a plurality of candidate co-channel interference sources. The information in the interference map may then be used to determine which, if any, of the interference sources represents a dominant interference source with respect to a particular sample $r_n$ of the received signal *r(t)*. When such a dominant interference source is present, the stored information regarding that interference source may be used to at least partly cancel out the identified interference source by jointly demodulating the identified interference source and the desired signal. In situations where no dominant interference source is identified, conventional demodulation may be used.

Pursuant to the teachings of the present invention, it will be realized that, given a fixed number of interference sources, the interference environment associated with any given received sample may be classified. In particular, a plurality of different "interference scenarios" are possible for any given received sample, where the number of possible interference scenarios will depend on the number of potential co-channel interference sources and on the definition used to characterize the interference environment into potential interference scenarios. By way of example, one potential method for characterizing the interference environment is to define interference scenarios for (i) the case where no dominant co-channel interference sources are present, (ii) the case where multiple dominant co-channel interference sources are present and (iii) define separate interference scenarios for each case where only one of the co-channel interference sources is dominant. Under this characterization, the possible interference scenarios for the situation where three potentially dominant interference sources are transmitting in the same channel as the desired signal are (i) no dominant interference source present (Scenario $S_0$), (ii) the first interference source is the only dominant interference source, (Scenario $S_1$), (iii) the second interference source is the only dominant interference source (Scenario $S_2$); (iv) the third interference source is the only dominant interference source (Scenario $S_3$) or (v) at least two of the three interference sources are dominant interference sources (Scenario $S_4$).

Under a different characterization of the interference environment, the three co-channel interference situation could be characterized into eight possible interference scenarios (instead of the five scenario characterization described above). Specifically, Scenario $S_4$ could be replaced by four separate scenarios (Scenarios $S_4$-$S_7$) that separately characterize each scenario where two or more of the interference sources are dominant at the same time. Thus, under this characterization of the interference environment, Scenarios $S_0$-$S_3$ would be as described above, and Scenarios $S_4$-$S_7$ would be as follows:

Scenario $S_4$ - The first and second interference sources are dominant.
Scenario $S_5$ - The first and third interference sources are dominant.
Scenario $S_6$ - The second and third interference sources are dominant.
Scenario $S_7$ - All three interference sources are dominant.

A variety of other characterizations could likewise be used to characterize the interference environment.

A variety of different criteria may be used for deciding whether or not a particular interference source is "dominant." For example, an interference source having a contribution to the received signal which exceeds a certain value or which exceeds the estimated or measured background noise level might be considered "dominant." Alternatively, an interference source having a contribution to the received signal that exceeded the contribution of the interference source having the next highest contribution by a certain level might be considered "dominant." Numerous other criteria could also be used. Furthermore, thresholds used in determining whether or not an interference source is dominant may be fixed or adaptive.

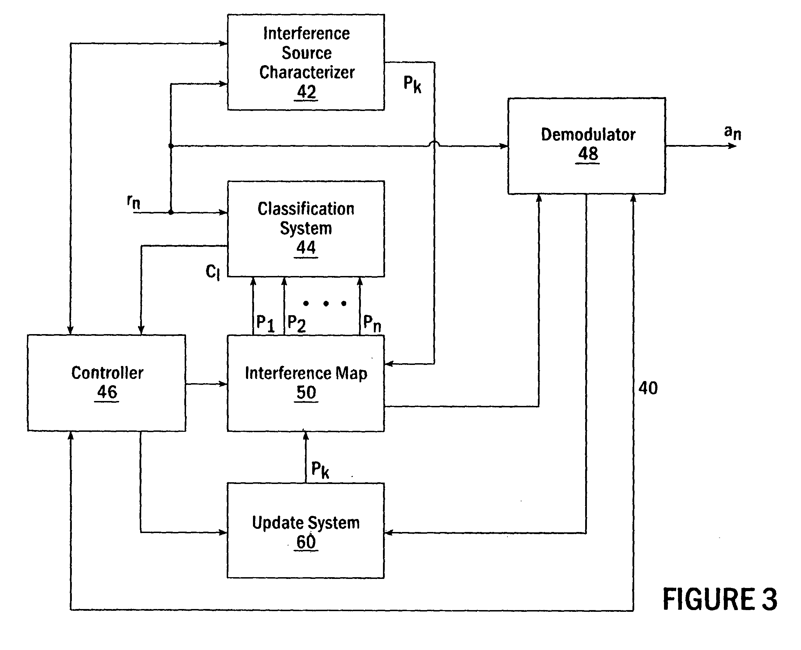

**Figure 3** is a block diagram depicting an interference mapping system **40** according to embodiments of the present invention. As illustrated in **Figure 3**, the interference mapping system **40** comprises an interference source characterizer **42,** a classification system **44,** a controller **46,** a demodulator **48,** an interference map **50** and an update system **60.** As illustrated in **Figure 3**, a set of baseband samples $r_n$ are input to the interference source characterizer **42,** the classification system **44** and/or the demodulator **48.** The baseband samples $r_n$ are provided by a receiver **190** (not depicted in **Figure 3**) which receives a signal $r(t)$, and a radio frequency ("RF") processor that performs such operations as amplifying the received signal $r(t)$, and mixing, filtering and producing baseband samples $r_n$ of the received signal $r(t)$. It will be appreciated that the RF processor may perform a variety of other functions as well.

As shown in **Figure 3,** the interference source characterizer **42** is also responsive to the controller **46,** and provides information to the interference map **50**. The classification system **44** receives a plurality of inputs from the interference map **50,** and provides information $C_j$ to the controller **46.** The demodulator **48** is further responsive to the controller **46** and an input from the interference map **50,** and outputs a sample stream $a_n$ which comprises an estimate of the digital data stream corresponding to the desired signal. The update system 60 is responsive to the controller 46 and the demodulator 48, and provides information which is used to update the interference map 50.

The interference source characterizer 42 identifies and distinguishes between the co-channel interference sources (if any) which are present in the received signal r(t). Different co-channel interference sources may be distinguished from each other using a variety of different methods. For instance, an interference source might be identified by locating a known symbol pattern in the received signal r(t). Such a known symbol pattern might be a known synchronization word or a coded digital voice color code which could be identified by correlating the baseband samples with symbol patterns that potential interference sources are known to transmit (e.g., in IS- I 36, each base station which are typically candidate interference sources -- transmits a known synchronization word every frame). Alternatively, an interference source might be identified based on interference source location information stored in memory at the wireless terminal 100 or periodically provided to the wireless terminal 100, along with known information regarding the physical position of the wireless terminal 100. Interference sources may also potentially be identified by frequency offset, as particular interference sources may be transmitting in a frequency band that only partially overlaps with the frequency band of the desired signal, such that differences in the received power spectra may be used to identify and distinguish different co-channel interference sources.

Additionally, interference sources may be identified in TDMA and CDMA communications systems by identifying the frame and/or slot boundaries of their transmissions. This may be accomplished, for example, by identifying patterns in the received signal r(t) where the received signal power decreases as may happen when a co-channel interference source ceases its transmission at the end of a slot or frame. For a mobile wireless terminal, the effects of

Doppler shifts may potentially be used to identify interference sources based on changes in the received spectra that occur as the mobile terminal moves. Interferer sample misalignment, dispersion and/or transmit/receive pulse shape provide yet additional methods for identifying and distinguishing between potential co-channel interference sources. Methods of identifying co-channel interference sources using various of the above described techniques are described in copending U.S. Patent Application Serial Nos. 09/143,821 filed August 31, 1998, 09/220,405 filed December 3 0, 1998; 09/699,920, filed October 30, 2000; 09/464,830 filed December 17, 1999 andogn47,344, filed December 22, 2000.

Interference source characterizer **42** may use one or more of the above methods, or other techniques, to identify one or more co-channel interference sources. In addition to identifying the candidate interference sources which are tracked in the interference map **50,** the interference source characterizer **42** also may be used to estimate various parameters associated with the signal received at the wireless terminal **100** from those interference sources. These parameters may be used, for example, during joint demodulation to facilitate cancellation of the contribution to the received signal of one or more of the interference sources.

The results of this identification in many cases provides information about various parameters associated with the interfering signal (e.g., signal power levels, signal timing, frequency or Doppler information, etc.). Once an interference source is identified in the received samples $r_n$, the interference source characterizer **42** may also perform additional operations, measurements or the like (*e.g.*, determining the arrival angle of the interferer signal when multi-element antennas are used for reception) to estimate additional parameters associated with the interference source and/or its contribution to the received signal *r(t)*. These parameters, which are denoted as vector $P_k$ in **Figure 3** (where k stands for the $k^{th}$ interference source), may be output from the interference source characterizer **42** to the interference map **50**. A variety of different interference source parameters may be used in the joint demodulation process, including, for example, estimated or known information regarding an interference source's relative timing, signal power, or frequency offset, or known symbol sequences (*e.g.*, synchronization words), the location of known symbol sequences and/or transmit/receive shapes of the interference source. As should be clear from the above, there may be significant overlap with respect to the parameters of an interference source that may be used to identify that interference source and the parameters associated with an interference source that may be used in the joint demodulation process. Consequently, in many situations it may be efficient to have the interference source characterizer **42** compile both types of information for each suspected or identified interference source, and use the interference map **50** to store both types of information.

As shown in **Figure 3,** the received samples $r_n$ are also input to a classification system **44.** The classification system **44** generates information which may be used to determine the interference scenario for each particular group of revived samples $r_n$. Pursuant to various embodiments of the present invention, the classification system **44** may determine a classification measure ($C_j$) for each potential interference scenario. In certain embodiments of the present invention, the classification measure $C_j$ is based on (related to) the difference between the actual received samples $r_n$ and an estimate of the received samples that would be expected under the $i^{th}$ interference scenario. One or more such classification measures may be determined for each interference scenario, and the interference scenario having classification measure(s) showing the smallest difference may be estimated as the interference scenario under which the samples $r_n$ were received. The classification measures ($C_j$) may be determined based on the parameters stored in the interference map **50.**

By way of example, consider an interference environment in which two co-channel interference sources have been identified and included in the interference map **50,** and in which the interference environment is divided into four possible interference scenarios ($S_0$ = no dominant interference source, $S_1$ = the first interference source is dominant, $S_2$ = the second interference source is dominant and $S_3$ = both interference sources are dominant. In this situation, the parameters stored in the interference map **50** could be used to determine an estimate $\hat{r}_n(S_i)$ of the received samples $r_n$ that would be expected to be received in each of the four interference scenarios $S_0$-$S_3$. By way of example, assume that the parameters stored in the interference map in a particular embodiment of the present invention are the values and sample positions of the synchronization sequences ($x_1,x_2$) included in the signals transmitted by the first and second potential interference sources. Also assume that the interference sources are synchronous (overlapping) with the desired signals synchronization sequence ($x_0$). In this situation, one way in which information from the interference map **50** could be used to determine the estimates $\hat{r}_n(S_i)$ is to form channel estimates for each potential interference scenario using least squares estimation. As noted above, for scenario $S_0$, only the desired signals channel is estimated, and thus $\hat{r}_n(S_i)$ may be computed as:

$$\hat{r}_n(S_0) = \sum_{k=0}^{K-1} c_k^0(n) x_0(n-k) \tag{1}$$

where $c_k^0(n)$ is the $k^{th}$ channel coefficient for the desired signal source and where K is the number of channel coefficients available (as each time-delayed version of the received signal has a different channel coefficient). For scenario $S_1$, the desired signals channel is calculated as for scenario $S_0$ and the channel for the first interference source is also calculated, resulting in:

$$\hat{r}_n(S_1) = \sum_{k=0}^{K-1} \left( c_k^0(n) x_0(n-k) + c_k^1(n) x_1(n-k) \right) \tag{2}$$

Similarly for scenario $S_2$ the channel estimates for the desired signal and the second interference source are calculated resulting in:

$$\hat{r}_n(S_2) = \sum_{k=0}^{K-1} \left( c_k^0(n) x_0(n-k) + c_k^2(n) x_2(n-k) \right) \tag{3}$$

Finally, for scenario $S_3$, the channel estimates are calculated for the desired signal and both interference sources, resulting in a value for $r_n(S_i)$ of:

$$\hat{r}_n(S_3) = \sum_{k=0}^{K-1} \left( c_k^0(n) x_0(n-k) + c_k^1(n) x_1(n-k) + c_k^2(n) x_2(n-k) \right) \tag{4}$$

While the above example illustrates one way in which information from the interference map **50** may be used to determine estimates $r_n(S_i)$ of the received samples $r_n$ that would be expected to be received in each of the interference scenarios $S_i$, it will be appreciated that numerous different techniques may be used, and that the appropriate technique may vary with the type of information stored in the interference map **50**.

Once the estimates $\hat{r}_n(S_i)$ of the received samples $r_n$ that would be expected to be received in each of the interference scenarios $S_i$ are determined, the classification measure for each interference scenario may then be determined as:

$$C_i = \sum_n \left| r_n - \hat{r}(S_j) \right|_n^2 \tag{5}$$

The classification measure $C_j$ having the lowest value may then be identified as corresponding to the interference scenario for the received samples $r_n$.

While the above example illustrates one possible classification measure $C_j$, it will be appreciated that a wide variety of different classification measures could be used to identify the dominant interference source(s), if any, associated with a particular set of received samples $r_n$. By way of example, the interference scenario could be classified based on a spectral analysis of the received signal with comparison to information regarding estimated frequency offsets of the interference sources tracked in the interference map **50**. Likewise, the samples $r_n$ might be correlated with known symbol sequences associated with each interference source, and identification of the sequence might indicate that the corresponding interference source was dominant with respect to this set of samples $r_n$. It will also be appreciated that other classification measures could be employed that looked at a variety of the parameters used to characterize the different interference sources and/or that performed a weighted or non-weighted average of several separate tests.

Referring again to **Figure 3,** once the classification measures $C_j$ have been determined by the classification system **44,** they may be provided to the controller **46.** The controller **46** may evaluate the classification measures $C_j$ to determine the interference scenario associated with the received samples $r_n$. By way of example, the interference scenario could be estimated for the particular classification measures $C_j$ set forth in the example of Equation (5) as:

$$S = \arg \min_{s_j} C_j(S_j) \tag{6}$$

where S is the interference scenario $S_j$ selected.

In embodiments of the present invention, it may be advantageous to impose a constraint that S must be less than a specified value to account for the case where it appears that none of the interference scenarios accurately characterize the interference environment (as might be the case where a new dominant interference source has just started transmitting). In this case, the interference scenario may be set to a default value, such as interference scenario $S_0$, where single-user demodulation is used. The specified value may be a predetermined value or may be adaptively selected.

In still other embodiments of the present invention, in the case where S is not less than the specified value, a search may be performed by the interference source characterizer **42** for a new interference source prior to the demodulation of the received samples $r_n$. If a new interference source is identified, one or more classification measures $C_j$ may be computed for interference scenarios in which this new interference source is dominant, and these newly computed classification measures may be evaluated to determine if any of them are less than the specified value. If so, the received samples $r_n$ may be jointly demodulated along with the newly identified interference source. If not, the interference scenario may be set to the specified default value (which is typically the no dominant interference source scenario where single-user demodulation is employed as the default demodulation).

The controller **46** may also specify to the demodulator **48** a particular demodulation method to use based on the determination regarding the interference scenario. In particular, as described in detail in copending U.S. Patent Application Serial No. 09/660,050, the performance of joint demodulation systems may be enhanced in many cases by "adaptively" employing joint demodulation. By "adaptively" it is meant that either conventional, joint or some other form of demodulation is used depending on which approach appears to be most suitable for a particular received signal interval. For example, in embodiments of the present invention, the controller 46 may specify that joint demodulation is employed only in situations where a single dominant interference source is estimated as being present in the received samples r, In these embodiments, the control of which demodulation technique is used may be based on the approach disclosed in U.S. Patent Application No. 09/660,050. An exemplary methodology for selecting the demodulation algorithm is disclosed in commonly-assigned U.S. Patent No. 5.841,816 to Dent et al. In other embodiments of the present invention., the controller 46 may specify that joint demodulation is employed in all instances where at least one dominant interference source is estimated as being present in the received samples $r_n$. In still other embodiments of the present invention, joint demodulation may be employed with respect to every sample.

The controller 46 may further direct the interference map 50 to pass parameters associated with the determined interference scenario to the demodulator 48 as discussed herein. The demodulator 48 demodulates the received samples r', using the method specified by the controller 46 (e.g., joint demodulation or conventional demodulation). It will be appreciated that a variety of different demodulation techniques may be employed which use information regarding the interference scenario and the parameters from the interference map 50 to eliminate interference due to the interference source(s) that were identified as dominant.

For example, demodulator 48 may use a join t demodulation technique in which symbols of the desired signal are decoded at the same time as symbols of a dominant interference source. Under this technique, the estimated contribution of the interference source is subtracted out to decode the desired signal and the estimated contribution of the desired signal is subtracted out to decode the interference source, where all possibilities of the received contribution from the desired signal and the interference source are tried, and a flscore" (e.g., a viterbi decoding metric) is kept for each. In another embodiment of the present invention, joint demodulation techniques may be used where the unknown symbols from the interference source (e.g., non-synchronization bits) are more accurately decoded by canceling out contributions of the desired signal where the received signal from the interference source overlaps with known synchronization or control sequences of the desired signal, and vice versa. In yet another embodiment, a technique may be employed that uses simple subtraction of synchronization and/or control symbols from the received samples that may or may not be weighted by channel estimates. Those of skill in the art will appreciate that a wide variety of techniques may be employed whereby the information from the interference map **50** and knowledge of the interference scenario are used to assist in reducing the interference caused by the identified dominant interference source or sources. Once the desired signal is demodulated, the bit stream $a_n$ output from the-demodulator **48** may then be subject to baseband processing such as decryption, decoding or the like to reconstruct the desired signal.

As noted above, the interference mapping system **40** also includes an interference map **50**. The interference map **50** may be implemented as a table in memory or in some other type of storage device or mechanism. The interference map **50** is used to store parameters associated with one or more candidate co-channel interference sources. The number of interference sources tracked in the interference map **50** may either be fixed or adaptively set. An adaptive approach may facilitate reducing the processing resources required by the interference mapping system **40,** as it may be used to reduce the number of interference sources tracked when only a few interference sources are likely to be dominant for any given time interval. Approaches for adaptively setting the number of interference sources tracked will be understood by those of skill in the art with reference to similar approaches used in the field of target detection and the disclosure provided herein.

The interference map **50** may receive information regarding identified co-channel interference sources from the interference source characterizer **42.** However, these candidate interference sources could be identified by another entity in the wireless communications system (*e.g.*, the base station in a cellular system could identity potential co-channel interference sources for the cellular users with which it is communicating), or could be pre-stored in the wireless terminal **100** (as might be the case where the wireless terminal **100** is operated in a limited geographic area or primarily operated in a limited number of locations). Accordingly, it will be understood that the information contained in the interference map **50** may be obtained in a wide variety of ways other than through the use of an interference source characterizer **42** as is done in the embodiment of **Figure 3.** Additionally, as discussed in more detail below, the update system **60** may also provide information regarding identified co-channel interference sources to the interference map **50.** The interference map **50** provides at least some of the stored parameters associated with some of the identified interference sources to the classification system **44** as discussed above.

In addition to storing parameters relating to the signal received from each candidate interference source, the interference map **50** may also store various other information, such as how often each interference source is selected for joint demodulation, time-steps specifying the last N occurrences in which particular interference sources were selected for demodulation or other such information. This information may be used, for example, in selecting which interference source to jointly demodulate in situations where the results of the classification suggest multiple possible interference scenarios or are not close to any of the interference scenarios.

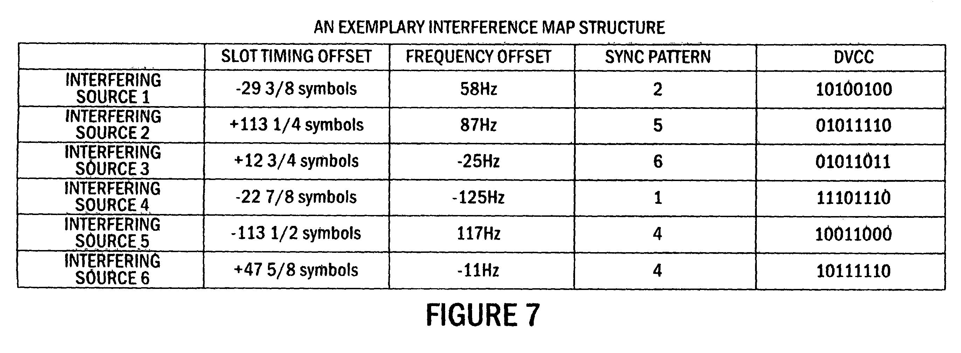

An exemplary structure of one possible interference map **50** is depicted in **Figure 7**. The interference map **50** depicted contains characteristics of interference sources that are useful in joint demodulation and for classifying which interference source(s) are dominant at any given time. Typically, no more than 6 co-channel interference sources need be considered, at least in the cellular telephone context, as typical cellular frequency re-use plans utilize the same frequency over again in cells lying at the vertices of a hexagon centered on the current cell.

In the example of **Figure 7,** the interference map **50** includes information on (i) the relative slot timing, (ii) the relative frequency offset and (iii) the synchronization sequence and other known control symbols (in this case a DVCC symbol pattern) for each possible interference source (which are arbitrarily numbered 1 to 6). As discussed above, by knowing the timing, the synchronization word and the DVCC, the demodulator can reduce the interference those symbols cause to the symbols of the desired signal with which they overlap.

The relative slot timing for each potential interference source may be determined by correlating the received signal samples with all the predetermined synchronization patterns used in the system, and determining the timing offset relative to the wanted signal at which the highest correlation is found with each synchronization pattern. Averaging may also be employed in this determination. One exemplary method of averaging would be to employ the technique of building a histogram of the location, in 1/8 symbol steps of timing offset, of the frequency with which the peak correlation was found at each timing offset. This timing offset is relatively stable so long as the receiver does not move more than 1/8th of a symbol, which is about 130 meters in the GSM system or 1500 meters in the IS136 system. At reasonable speeds it takes of the order of 5 to 100 seconds for the timing to shift 1/8th of a symbol, during which time 1000 to 5000 frames would have been received. This allows substantial averaging to be used to determine the timing accurately. Such averaging techniques may also be employed in many situations in determining the relative frequency offset between a signal from an interference source and the desired signal.

The synchronization pattern column in **Figure 7** has an entry of a number between 1 and 6 that refers to which of a number of predetermined symbol patterns the interference source was detected to be using (in this example there are at least six such distinct synchronization patterns). The association between the synchronization pattern and the timing offset is clear, but to associate frequency offset with synchronization pattern preferably requires analyzing the received signal burst after decoding the desired signal and subtracting it out, to determine that a particular interference source is present in the residual signal and dominant. Such analysis may be carried out "off-line" when signal processing resources are available by saving the residuals from Viterbi decodig of the wanted signal for future analysis.

The DVCC column in **Figure 7** refers to another known symbol pattern that is included in transmission in IS-136 systems. It is equivalent to a synchronization word, except that it is any one of 256 8-bit patterns. In IS-136 systems, the 8-bit pattern is encoded using a (12, 8) block code to form a 12-bit (6 symbol) pattern that is included in the center of transmitted slots. The DVCC uniquely determines which of a number of base stations in a given area the interference is coming from, and would be of value in identifying the source to the network if the network should so request.

As shown in **Figure 3**, the interference mapping system **40** may include an update system **60** that periodically updates the information stored in the interference map **50**. In the embodiment of **Figure 3,** the demodulator **48** provides information to the update system **60** regarding any interference sources that are jointly demodulated along with the desired signal. The controller **46** also provides information to the update system **60,** including identification as to the interference source (or sources) that is subject to the joint demodulation. The update system **60** compiles, estimates and/or calculates parameters relating to this interference source, and provides them to the interference map **50** so as to update the interference map **50** with the latest information regarding the particular interference source, if any, subject to joint demodulation.

The update system **60** may be useful for several reasons. First, in many situations, the wireless terminal **100** is a mobile terminal, and, thus, the features used to identify an interference source and/or the parameters relating to an interference source that are used in the joint demodulation process may change over time as the mobile terminal moves. One or more of the interference sources may also be mobile, which, likewise, may cause changes in the contribution of one or more interference sources to the received signal $r(t)$. In addition, changes in atmospheric conditions may also change the features/parameters associated with an interference source, as may changes in the transmission of those interference sources (*e.g.*, if they start communicating with a different user). Thus, the update system **60** may be used to keep the information in the interference map **50** current, thereby possibly facilitating efforts to accurately identify the interference scenario and to successfully jointly demodulate the signals received from the dominant interference sources along with the desired signal.

The update system **60** also may facilitate minimizing the processing requirements of the interference mapping system **40.** In particular, by using the update system **60** to update the interference map **50** with information that may be partially, or even fully, determined during joint demodulation, the frequency with which the interference source characterizer **42** is used to identify and characterize interference sources may be reduced. The update system **60** may even eliminate the need for the interference source characterizer **42** in various embodiments of the present invention.

**Figure 3** is a schematic block diagram, that depicts the operations that may be carried out by a specific embodiment of the interference mapping systems **40** of the present invention. Consequently, it will be appreciated that the operations carried out by the blocks in **Figure 3** may be performed by more or less hardware and/or software components than there are blocks depicted in **Figure 3**. Additionally, it will be appreciated that operations associated with one block in **Figure 3** may be carried out by another block. For instance, instead of providing the classification measures $C_j$ to the controller **46,** the classification system **44** may instead perform the computation of equation (6) and provide the identified interference scenario to the controller **46.** Furthermore, it will also be appreciated that the interference mapping system **40** (or components thereof) may be implemented as part of the receiver **190,** or may be implemented as a separate system.

Pursuant to embodiments of the present invention, the interference mapping system **40** may be adaptive with respect to the number of interference sources it tracks. In these embodiments, the interference mapping system **40** may keep track of the number of interference sources, may identify new dominant interferences, and may also identify when interference sources included in the interference map **50** are no longer present.

In one such embodiment of the present invention, the wireless terminal **100** may acquire information regarding its own position and the position of co-channel interference sources. Such location information may be available, for example, to a wireless terminal **100** having a Global Positioning Satellite ("GPS") receiver (which allows it to determine its own position) and having access to information regarding the locations of potential interfering base stations (which do not move), which could, for example, be stored in memory and/or As the mobile terminal 100 moves, the interference map 50 could be updated to reflect expected changes in the signal strengths, Doppler frequencies, etc. of the various interference sources included in the interference map 50. Such updating of the interference map 50 could be done in conjunction with, or as a substitute for, the updating of the interference map 50 described above that is based on the output of the joint demodulation of one or more interfering signals along with the desired signal.

In other embodiments of the present invention, the wireless terminal 100 may have GPS capability or other means for determining its own position, but may not, a priori, have information regarding the position of potential interference sources. In such terminals, it may be advantageous to store information regarding interference sources in a database (e.g., their estimated position, signal strength, etc.), so that the information in the database may be recalled and used when the wireless terminal 100 revisits the same position at a later date. To reduce the memory requirements of the database, information regarding interference sources might only be stored with respect to positions specified by the user (e.g., the user's home, 5 place of work, etc.). Alternatively, the wireless terminal 100 might track frequently visited locations, and only store interference source information for the locations visited most frequently over some period of time. Storing of interference source information associated with particular locations may also be done in situations in which the wireless terminal 100 has position location information regarding interference sources. It may also be done with wireless terminals which do not have position location determination capability, by allowing the user to store interference environment information determined at various locations (e.g., home, office), and allowing the user to manually input the location. Various other modifications to the above approaches, or a combination of these techniques, might also be used.

In still other embodiments of the present invention, when new interference sources are detected, parameters corresponding to the new interference source may be estimated and entered into the interference map 50. For example, if a significant co-channel interference source is detected that does not correspond to any existing interference source (or in some embodiments, combination of interference sources), it may be assumed that a new co-channel interference source is present. Such a new, strong interference source may be detected by the methods discussed in U.S. Patent Application No. 09/660,050, the teachings of which are, or by the methods discussed above for identifying and characterizing interference sources. The parameters may also be estimated directly from the received signal (e.g., by searching for a synchronization word or some other known sequence in the received signal or by further processing the received signal to obtain other parameters such as the arrival angle for each user). Once such a new interference source has been detected, parameters corresponding to the new interference source are determined and stored in the interference map 50. One or more new interference scenarios ($S_i$) may also be created, and the classification system 44 thereafter may compile classification measure(s) for each new interference scenario.

In still other embodiments of the present invention, interference sources may be eliminated from the interference map 50 if they appear to have been inactive for some period of time. The period of time specified may be predetermined (*e.g.*, fixed or selected by the user), or may be adaptively selected based on considerations such as available memory and/or processing complexity. Inactivity may be estimated, for example, based on a weighted or unweighted count of the number of received sample groups $r_n$ for which a particular interference source had been identified as a dominant interference source over the specified time period.

As noise is generally present in the received signal, multiple entries may arise in the interference map 50 for a single interference source. While the inclusion of such "redundant" entries in the interference map 50 may not necessarily cause problems with demodulation, both the memory requirements of the interference map 50 and the computation associated with determining the classification measures and/or updating the interference map 50 may be reduced by merging redundant entries into a single entry. Moreover, by using averaging techniques in the merging process, it may also be possible to improve the accuracy of the interferer parameters stored in the interference map 50. Such "redundant" entries in the interference map 50 may be identified, for example, by searching for entries in the map having variances which are less than a predetermined value. This determination may be based on a single parameter or on a plurality of the parameters stored in the interference map 50.

Pursuant to still other embodiments of the present invention, the computation required to determine whether or not an interference source is present, and/or which interference source is dominant, may be performed "off-line." As noted above, interference sources may be identified, for example, by determining the timing of particular interference sources with respect to the timing of the desired signal. This may be accomplished, for example, by identifying a known symbol pattern such as a synchronization word, a coded digital voice color code or some other sequence which differs for different co-channel interference sources, and then performing correlations with the known symbol pattern. However, performing such correlations may require significant processing resources, particularly for small, battery powered wireless terminals such as cellular-telephones. Background or "off-line" processing of the received signal thus may be used to minimize the amount of processing capability provided in the wireless terminal 100.

In one such embodiment of the present invention, the desired signal contained within the samples $r_n$ is jointly demodulated along with the interference source the classification system 44 indicates is dominant using the parameters for the dominant interference source stored in the interference map 50. The residual signal samples after demodulating the received signal samples $r_n$ and subtracting out the desired signal are then saved (these residuals may be available in some embodiments of the present invention as a byproduct of the MLSE branch metric computation in the joint demodulator). If subsequent error correction/detection decoding indicates that the desired signal was correctly decoded, the saved residual samples can be placed in a queue for "off-line" processing, meaning that they may be processed when signal processing resources become free for use on other tasks. Alternatively, the saved residual samples can be queued for off-line processing regardless of the result of the error correction/detection decoding.

In these embodiments of the present invention, processing resources may become available for "off-line" processing when, for example, the wireless terminal 100 determines that no dominant co-channel interference source is present such that conventional (as opposed to joint) demodulation may be used. Similarly, there may be situations where a variety of joint demodulation techniques may be used which differ in complexity, such that processing resources may become available when the less complex techniques are used. Processing resources may also become available when it is determined that speech encoders, voice recognition software, or various other features of the wireless terminal 100 need not be used during a particular slot, frame, or frames. These available processing cycles may thus be used to operate on the background queue, for example, to perform correlations with different time shifts of known symbol patterns (*e.g.*, to identify a synchronization word) to determine the strength, timing, frequency errors, time dispersion and/or various other parameters associated with one or more co-channel interfererence source, which are

then stored in interference map **50.**

Once the interference map **50** is updated with this information, it may be possible to reduce the amount of on-line and off-line processing required in the future. For instance, timing information determined with respect to a particular interference source via the off-line processing may be used to more quickly determine which interference source is dominant in future received samples by correlating those received samples with the synchronization words associated with the identified interference sources only at the timings determined for those interference sources. Likewise, the path of the MLSE trellis may be constrained to pass only through a known symbol sequence (*e.g.*, synchronization word) associated with a particular interference source when jointly demodulating that interference source with the desired signal. The timing information may also be used to reduce the amount of off-line processing required by using it to center the correlation searches performed in future off-line processing efforts.

In still other embodiments of the present invention, an off-line simulator may be used to test the performance of various demodulation algorithms for a particular interference scenario over a plurality of slots. The average performance of each algorithm over the plurality of slots may then be determined, and the algorithm providing the best average performance may be selected to be associated with that interference scenario. Then, when it is determined with respect to a set of received signal samples $r_n$ that a particular interference scenario is in effect, the selected algorithm may be used in the demodulation of those received signal samples.

Pursuant to other embodiments of the present invention, a copy of the received samples $r_n$ may be stored, so that they may be re-demodulated once the information regarding the interference source is obtained during joint demodulation and used to update the interference map **50.** In these embodiments, the demodulation process would proceed as discussed above with the following two modifications. First, as noted above, a copy of the received samples would be stored in memory or otherwise made available for later use. Then, after the update system **60** has updated the interference map **50** with information regarding the dominant interference source(s), the joint demodulation process could be rerun to obtain more accurate detection results.

In the present disclosure, operations of the present invention are described, in part, by a series of flowcharts and block diagrams. It will be appreciated that blocks and combinations of blocks of these flowcharts and block diagrams can be implemented using special purpose hardware such as discrete analog and/or digital hardware, ASICs or gate arrays that are used to implement an apparatus. The blocks and combinations of blocks of the flowcharts and block diagrams can also be implemented using computer program instructions which may be loaded and executed on a computer or other programmable apparatus, such as a microcontroller, microprocessor, ASIC, DSP or other processing circuit, to produce a machine such that the instructions which execute on the computer or other programmable data processing apparatus create means for implementing the operations specified in the flowchart block or blocks. The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the operations specified in the flowchart and block diagram block or blocks. Accordingly, blocks of the flowcharts and block diagrams support combinations of means for performing the specified operations and combinations of steps for performing the specified operations. It will also be understood that each block of the flowcharts and block diagrams and combinations of blocks therein, can be implemented by special purpose hardware-based computer systems which perform the specified operations or steps, or combinations of special purpose hardware and computer instructions.

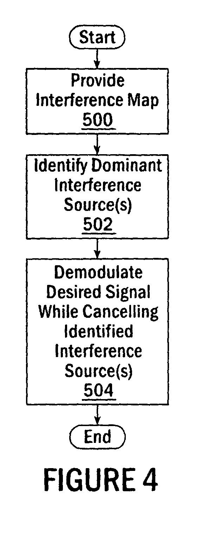

**Figure 4** is a flow chart diagram illustrating methods for demodulating a received signal according to embodiments of the present invention. As illustrated in **Figure 4,** an interference map is provided which contains information regarding a plurality of candidate interference sources (block **500**)**.** As noted above, this interference map may be provided in a variety of ways, including, for example, by iteratively building the map as interference sources are identified, using a pre-stored interference map or building the interference map prior to the start of any joint demodulation using an interference source characterizer. Baseband samples from the received signal are evaluated to identify any candidate interference sources that comprises a dominant interference source (block **502**). This evaluation may be based on both the received signal and information regarding the plurality of candidate interference sources obtained from the interference map. Finally, the baseband samples may be demodulated while canceling at least part of the contribution of any identified dominant interference source (block **504**).

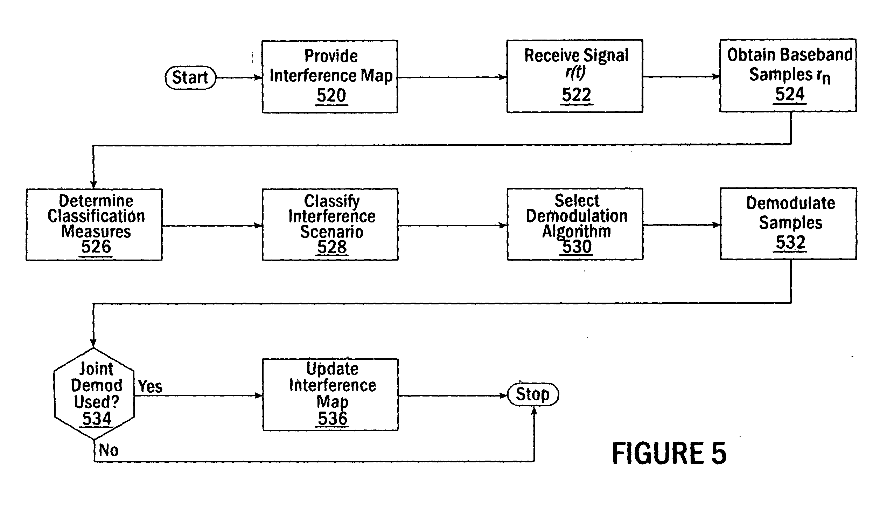

**Figure 5** is a flow chart diagram illustrating operations of further embodiments of the present invention. As shown in **Figure 5**, an interference map is provided which contains information regarding a plurality of candidate interference sources (block **520**). This interference map may be provided, for example, by any of the exemplary methods discussed above with respect to **Figure 4.** The wireless terminal **100** may receive a signal *r(t)* that includes a desired carrier, signals from one or more co-channel interference sources, and noise (block **522**). The received signal *r(t)* may be amplified, mixed and filtered to produce a baseband sample set $r_n$ (block **524**). A plurality of classification measures may be provided, wherein at least one classification measure is typically determined for each potential interference scenario (block **526**). These classification measures may be determined based on the baseband sample $r_n$ and the

information contained in the interference map **50** regarding the plurality of candidate interference sources. The classification measures may be used to classify the interference scenario (block **528**). Based on this classification, a demodulation algorithm may be selected for the baseband samples $r_n$ (block **530**), and thereafter the baseband samples $r_n$ may be demodulated according to the selected demodulation algorithm (block **532**). Finally, as shown in **Figure 5,** if the selected demodulation algorithm included joint demodulation (block **534**), information regarding one or more of the interference sources obtained from the joint demodulation process may be used to update the interference map (block **536**).

Example

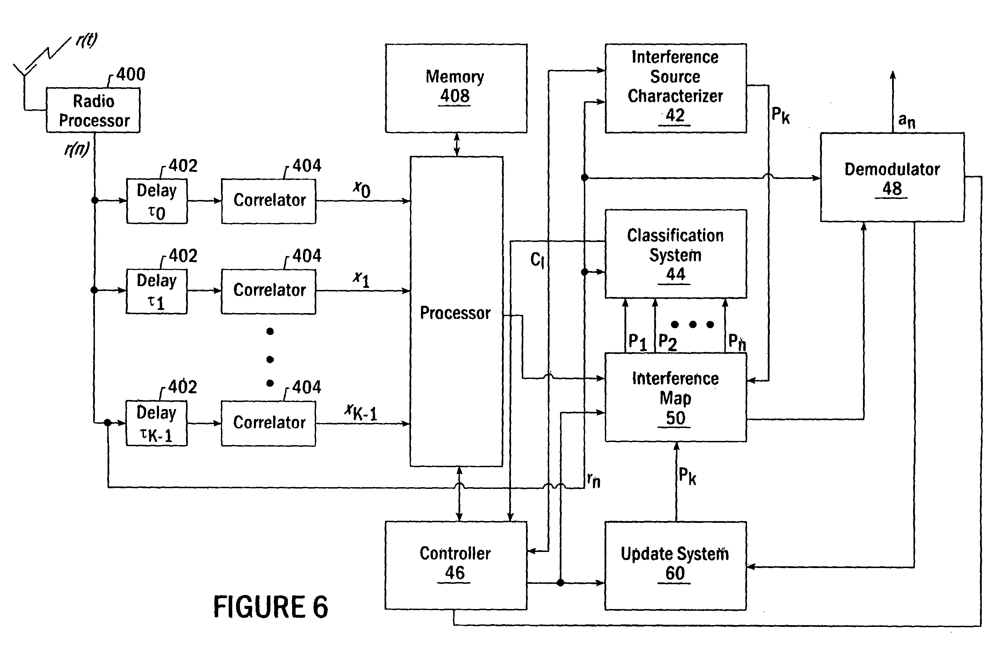

An exemplary embodiment of the present invention is depicted in **Figure 6**. In this exemplary embodiment, it is assumed that the interference map stores a relatively simple set of parameters, namely the relative timing and frequency offset of the interference sources. It will be appreciated, as discussed above, that a wide variety of additional parameters may be estimated and stored in the interference map so as to be used in assisting to reduce interference during demodulation. Such other parameters, include, for example, the arrival angle and/or Doppler speed of interfering signals, the extent of dispersion of a received interfering signal, known fields within an interfering signal such as synchronization sequences and/or control fields and the measured physical position of the interference source.

As illustrated in **Figure 6,** a signal $r(t)$ is received from a radio communications medium and processed by a radio processor **400** to produce a set of baseband samples $r_n$. These baseband samples $r_n$ are input to a bank of delays **402** and correlators **404** that are used to correlate time offset versions of the baseband samples $r_n$ with one or more symbol sequences that are known to be used by candidate interference sources. The outputs of the correlators **402** may be examined and/or processed by a processor **406** to determine if the known symbol sequence is contained within $r_n$. Correlations may be performed with respect to more than one known symbol sequence. Upon locating such a known symbol sequence, the processor **406** may determine the time offset between the desired signal and the signal associated with the known symbol sequence (*i.e.*, the signal from the identified interference source), and provides this information to an interference map **50**. The processor **406** may also attempt to measure or estimate various other parameters associated with the identified interference source, including frequency offset. These parameters may likewise be provided to the interference map 50.

The processor 406 is coupled to a memory block 408. The memory block 408 may contain various types of information that may be used in identifying and estimating parameters of candidate interference sources such as known synchronization sequences used by candidate interference sources. The processor 406 is also operatively connected to a controller 46, which may provide processor 406 with information regarding the timing of the desired signal. The interference map 50 comprises a table of variable width in which various information is stored that relates to each identified candidate co-channel interference source. The stored information may include, for example, an identifier for the interference source, the -relative timing of the interference source with respect to the desired signal, and the synchronization sequences and the frequency offset of each interference source.

The set of baseband samples $r_n$ are also provided to a classification system 44. The classification system may be implemented as a software routine running on a processor provided in wireless terminal 100. The classification system receives inputs from the interference map 50 relating to each candidate interference source currently stored in the interference map 50. In this embodiment of the present invention, the parameters provided to classification system 44 comprise the synchronization sequences, the frequency offset and the relative delay/frame boundary of each interference source. Based on these parameters, classification system 44 estimates the received signal that would have been received for each of the potential interference scenarios. In this embodiment, an interference scenario is postulated for the case where each of N candidate interference sources is dominant, as well as the case where no interference source is dominant (resulting in a total of N+1 interference scenarios). The classification system 44 estimates the received signal that would have been received for each of the potential interference scenarios by reconstructing the hypothesized receive signal over the samples corresponding to the synchronization sequences of each signal for each potential interference scenario. Channel estimates are obtained for each signal over these samples, for example, using least squares estimation for each known synchronization sequence and semi-blind channel estimation for the unknown sequences (further explanation on such approaches may be found in U.S. Patent Application Serial No. 09.143,821. The frequency offset and timing delay is used for this purpose. Once these estimates are obtained, the classification measure of Equation (5) above is computed for each of the N+1 interference scenarios.

The classification measures $C_j$ are provided by the classification system **44** to the controller **46.** The controller **46** identifies the interference scenario-corresponding to the classification measure $C_j$ having the lowest value as potentially being the interference scenario associated with the baseband samples $r_n$. However, as separate interference scenarios are not postulated for the cases where two or more interference sources comprise dominant interference sources, this classification measure is then checked to make sure it is less than a specified value, as a way of confirming that if the classification system appears to accurately characterize the interference scenario. In this embodiment, the specified value is 3 dB less than the value of the scenario where no dominant interference source is present, although numerous other potential fixed or specified values could be used. If the classification measure is less than the specified value, the interference scenario associated with the classification measure is identified as the interference scenario. If not, the interference scenario is set to the "no dominant interference source" scenario.

Once the interference scenario is determined, the controller **46** sends a signal to the interference map **50** to prompt the interference map **50** to provide the parameters associated with the dominant interference source in the identified interference scenario to the demodulator **48.** The parameters provided to the demodulator in this embodiment comprise frequency offset, relative timing delay and the synchronization sequences. The demodulator **48** takes the received samples $r_n$ and the parameters provided by the interference map **50** to jointly demodulate the interference source and the desired signal. Details on how this joint demodulation may be performed are provided in U.S. Patent Application No. 09/143,821, the disclosure of which is hereby incorporated by reference as if set forth in its entirety.

A series of symbols $a_n$ are output from the demodulator **48,** which represent an estimate of the desired signal. Information relating to the interference source, specifically including the frequency offset and relative timing delay, is also output from the demodulator 48 and sent to the update system **60**. The update system **60** then provides this information to the interference map **50** to replace any outdated information regarding the interference source stored in the interference map **50.**

As will be appreciated by one of skill in the art, embodiments of the present invention may be configured as a method, data processing system, or computer program product. Accordingly, the present invention may take the form of an entirely hardware embodiment, an entirely software embodiment or an embodiment combining software and hardware aspects all generally referred to herein as a "circuit." Furthermore, the present invention may take the form of a computer program product on a computer-usable storage medium having computer-usable program code means embodied in the medium. Any suitable computer readable medium may be utilized including hard disks, CD-ROMs, optical storage devices, a transmission media such as those supporting the Internet or an intranet, or magnetic storage devices.

While portions of the present application are described with respect to two-signal joint demodulation algorithms (*e.g.*, that jointly demodulate a desired signal and one interfering signal), it will be appreciated that joint demodulation algorithms that demodulate more than two signals may also be employed in the methods and systems of the present invention. Such joint demodulation systems may advantageously be used with the present invention in cases where the interference scenario includes more than one dominant interference source. Furthermore, while the present invention has primarily been described with respect to a wireless terminal 100 having both transmit and receive capabilities, it will be appreciated that the interference mapping techniques of the present invention may also be employed in receive-only wireless terminals.

In the drawings and specification, there have been disclosed typical preferred embodiments of the invention and, although specific terms are employed, they are used in a generic and descriptive sense only and not for purposes of limitation, the scope of the invention being set forth in the following claims.

**Claims**

1. A method of demodulating a received signal, the method comprising: providing (500) an interference map containing information regarding a plurality of candidate interference sources;
   identifying (502) any of the candidate interference sources that comprise a dominant interference source based on a received signal and the information regarding the plurality of candidate interference sources;
   demodulating (504) the received signal to recover wanted information while compensating for interference with the aid of the information stored in the interference map, **characterised in that** the method further comprises: determining a position where the received signal is received;
   determining a position associated with at least one of the plurality of candidate interference sources; estimating information regarding the at least one of the plurality of candidate interference sources based on the position where the received signal is received and the position associated with the at least one candidate interference source; and storing the estimated information in the interference map.

2. The method of Claim 1, wherein providing an interference map containing information regarding a plurality of candidate interference sources comprises: identifying a plurality of candidate interference sources; generating information regarding the identified candidate interference sources; storing the generated information in the interference map.

3. The method of Claim 1, wherein identifying any of the candidate interference sources that comprise a dominant interference source based on the received signal and the information regarding the plurality of candidate interference sources comprises: generating a plurality of classification measures associated with a plurality of interference scenarios, identifying as dominant interference sources any candidate interference sources associated with the interference scenario which the classification measures indicate is the most likely interference scenario.

4. The method of Claim 1, wherein demodulating the received signal to recover wanted information while compensating for interference with the aid of the information stored in the interference map comprises jointly demodulating a desired carrier and any identified dominant interference source.

5. The method of Claim 3, wherein the method further comprises: estimating information regarding any identified dominant interference source based on information uncovered regarding any identified dominant interference sources during demodulation of the received signal; and storing the information in the interference map.

6. The method of Claim 1, wherein the method further comprises: identifying a candidate interference source in the interference map that has been inactive for a specified period; and removing, the information associated with the inactive candidate interference source from the interference map.

7. The method of Claim 1, wherein the method further comprises: identifying a new candidate interference source that is not one of the plurality of candidate interference sources included in the interference map; generating information regarding the identified new candidate interference source; and storing the generated information in the interference map.

8. The method of Claim 1, wherein the information regarding the plurality of candidate interference sources includes information regarding a relative timing of a desired signal and at least one of the candidate interference sources.

9. The method of Claim 1, wherein the method further comprises: identifying two or more entries in the interference map corresponding to a single candidate interference source; and merging the two or more identified entries into a single entry.

10. The method of Claim 1, wherein the method further comprises: error correction decoding the demodulated received signal to provide an estimate of a desired signal; processing the received signal to determine parameters associated with at least one interference source; and storing the determined parameters in the interference map.

11. The method of Claim 10, wherein processing the received signal to determine parameters associated with at least one interference source is only performed if the error correction decoding indicates the desired signal was correctly received.

12. The method of Claim 10, wherein processing the received signal to determine parameters associated with at least one interference source is performed using background processing.

13. A system for demodulating a received signal, the system comprising: an interference map (50) containing information regarding a plurality of candidate interference sources;
means for identifying (46) any of the candidate interference sources that comprise a dominant interference source based on a received signal and the information regarding the plurality of candidate interference sources; demodulator (48) for demodulating the received signal to recover wanted information while compensating for interference with the aid of the information stored in the interference map, **characterised in that** the system further comprises: means for determining a position where the received signal is received; means for determining a position associated with at least one of the plurality of candidate interference sources; an update system (60) for estimating information regarding the at least one of the plurality of candidate interference sources based on the position where the received signal is received and the position associated with the at least one candidate interference source; and for storing the estimated information in the interference map (50).

14. The system of Claim 13, wherein the interference map containing information regarding a plurality of candidate interference sources comprises: means for identifying (46) a plurality of candidate interference sources; means for generating information regarding the identified candidate interference sources; means for storing the generated information in the interference map.

15. The method of Claim 13, wherein the means for identifying any of the candidate interference sources that comprise a dominant interference source based on the received signal and the information regarding the plurality of candidate interference sources comprises: a classification system for generating a plurality of classification measures associated with a plurality of interference scenarios, means for identifying as dominant interference sources any candidate interference sources associated with the interference scenario which the classification measures indicate is the most likely interference scenario.

16. The method of Claim 13, wherein the demodulator for demodulating the received signal to recover wanted information while compensating for interference with the aid of the information stored in the interference map comprises means for jointly demodulating a desired carrier and any identified dominant interference source.

17. The method of Claim 15, wherein the system further comprises: an update system for estimating information regarding any identified dominant interference source based on information uncovered regarding any identified dominant interference sources during demodulation of the received signal; and for storing the information in the interference map.

**Patentansprüche**

1. Ein Verfahren zum Demodulieren eines empfangenen Signals, umfassend:

Bereitstellen (500) einer Interferenzkarte, die Information über eine Mehrzahl möglicher Interferenzquellen enthält;

Identifizieren (502) aller eine dominante Interferenzquelle enthaltenden möglichen Interferenzquellen aufgrund eines empfangenen Signals und der Information über die Mehrzahl möglicher Interferenzquellen;

Demodulieren (504) des empfangenen Signals zum Wiederherstellen gewünschter Information während des Interferenzausgleichs mit Hilfe der in der Interferenzkarte gespeicherten Information, **dadurch gekennzeichnet, dass** das Verfahren ferner umfasst:

Bestimmen einer Position, an der das empfangene Signal empfangen wird;

Bestimmen einer Position, die mit mindestens einer aus der Mehrzahl möglicher Interferenzquellen verknüpft ist;

Schätzen der Information über die mindestens eine aus der Mehrzahl möglicher Interferenzquellen aufgrund der Position, an der das empfangene Signal empfangen wird, und der Position, die mit mindestens einer möglichen Interferenzquelle verknüpft ist; und

Speichern der geschätzten Information in der Interferenzkarte.

2. Verfahren nach Anspruch 1, wobei das Bereitstellen einer Interferenzkarte, die Information über eine Mehrzahl möglicher Interferenzquellen enthält, Folgendes umfasst:

Identifizieren einer Mehrzahl möglicher Interferenzquellen;

Erzeugen von Information über die identifizierten möglichen Interferenzquellen;

Speichern der erzeugten Information in der Interferenzkarte.

3. Verfahren nach Anspruch 1, wobei das Identifizieren aller möglichen Interferenzquellen, die eine aufgrund des empfangenen Signals und der Information über die Mehrzahl möglicher Interferenzquellen ermittelte dominante Interferenzquelle enthalten, Folgendes umfasst:

Erzeugen einer Mehrzahl von mit einer Mehrzahl von Interferenzszenarios verknüpften Klassifizierungsmaßnahmen,

Identifizieren, als dominante Interferenzquellen, aller möglichen Interferenzquellen, die mit dem Interferenzszenario verknüpft sind, welches nach Maßgabe der Klassifizierungsmaßnahmen das wahrscheinlichste Interferenzszenario ist.

4. Verfahren nach Anspruch 1, wobei das Demodulieren des empfangenen Signals zur Wiederherstellung gewünschter Information während des Interferenzausgleichs mit Hilfe der in der Interferenzkarte gespeicherten Information das gemeinsame Demodulieren eines gewünschten Trägers und irgendeiner identifizierten dominanten Interferenzquelle umfasst.

5. Verfahren nach Anspruch 3, wobei das Verfahren weiterhin umfasst:

   Schätzen der Information über irgendeine identifizierte dominante Interferenzquelle aufgrund von Information, die während der Demodulierung des empfangenen Signals über irgendeine identifizierte dominante Interferenzquelle entdeckt wurde; und

   Speichern der Information in der Interferenzkarte.

6. Verfahren nach Anspruch 1, wobei das Verfahren weiterhin umfasst:

   Identifizieren einer möglichen Interferenzquelle in der Interferenzkarte, die für einen bestimmten Zeitraum inaktiv war; und

   Entfernen der mit der inaktiven möglichen Interferenzquelle verknüpften Information aus der Interferenzkarte.

7. Verfahren nach Anspruch 1, wobei das Verfahren weiterhin umfasst:

   Identifizieren einer neuen möglichen Interferenzquelle, die nicht zu der Mehrzahl möglicher Interferenzquellen gehört, die in der Interferenzkarte enthalten sind;

   Erzeugen von Information über die identifizierte neue mögliche Interferenzquelle; und

   Speichern der erzeugten Information in der Interferenzkarte.

8. Verfahren nach Anspruch 1, wobei die Information über die Mehrzahl möglicher Interferenzquellen Information über das relative Timing eines gewünschten Signals und mindestens eine der möglichen Interferenzquellen umfasst.

9. Verfahren nach Anspruch 1, wobei das Verfahren weiterhin umfasst:

   Identifizieren von zwei oder mehr Einträgen in der Interferenzkarte, die einer einzigen möglichen Interferenzquelle entsprechen; und

   Zusammenlegen der zwei oder mehr identifizierten Einträge zu einem einzigen Eintrag.

10. Verfahren nach Anspruch 1, wobei das Verfahren weiterhin umfasst:

   Fehlerkorrigierendes Dekodieren des demodulierten Signals zur Bereitstellung einer Schätzung eines gewünschten Signals;

   Verarbeiten des empfangenen Signals zur Bestimmung von mit mindestens einer Interferenzquelle verknüpften Parametern; und

   Speichern der so bestimmten Parameter in der Interferenzkarte.

11. Verfahren nach Anspruch 10, wobei das Verarbeiten des empfangenen Signals zur Bestimmung von mit mindestens einer Interferenzquelle verknüpften Parametern nur dann durchgeführt wird, wenn fehlerkorrigierendes Dekodieren anzeigt, dass das gewünschte Signal korrekt empfangen wurde.

12. Verfahren nach Anspruch 10, wobei das Verarbeiten des empfangenen Signals zur Bestimmung von mit mindestens einer Interferenzquelle verknüpften Parametern mit Hilfe von Hintergrundverarbeitung durchgeführt wird.

**13.** Ein System zum Demodulieren eines empfangenen Signals, umfassend:

eine Interferenzkarte (50), die Information über eine Mehrzahl möglicher Interferenzquellen enthält;

ein Mittel zum Identifizieren (46) aller eine dominante Interferenzquelle enthaltenden möglichen Interferenzquellen aufgrund eines empfangenen Signals und der Information über die Mehrzahl möglicher Interferenzquellen;

ein Demodulator (48) zum Demodulieren des empfangenen Signals zur Wiederherstellung gewünschter Information während des Interferenzausgleichs mit Hilfe der in der Interferenzkarte gespeicherten Information,

**dadurch gekennzeichnet, dass** das System weiterhin umfasst:

ein Mittel zum Bestimmen einer Position, an der das empfangene Signal empfangen wird;

ein Mittel zum Bestimmen einer Position, die mit mindestens einer aus der Mehrzahl möglicher Interferenzquellen verknüpft ist;

ein Änderungssystem (60) zum Schätzen von Information über die mindestens eine aus der Mehrzahl möglicher Interferenzquellen aufgrund der Position, an der das empfangene Signal empfangen wird, und der Position, die mit der mindestens einen möglichen Interferenzquelle verknüpft ist; und zum Speichern der geschätzten Information in der Interferenzkarte (50).

**14.** System nach Anspruch 13, wobei die Interferenzkarte, die Information über eine Mehrzahl möglicher Interferenzquellen enthält, umfasst:

ein Mittel zum Identifizieren (46) einer Mehrzahl möglicher Interferenzquellen;

ein Mittel zum Erzeugen von Information über die identifizierten möglichen Interferenzquellen;

ein Mittel zum Speichern der erzeugten Information in der Interferenzkarte.

**15.** Verfahren nach Anspruch 13, wobei das Mittel zum Identifizieren aller eine dominante Interferenzquelle enthaltenden möglichen Interferenzquellen aufgrund des empfangenen Signals und der Information über die Mehrzahl möglicher Interferenzquellen Folgendes umfasst:

ein Klassifizierungssystem zum Erzeugen einer Mehrzahl von mit einer Mehrzahl von Interferenzszenarios verknüpften Klassifizierungsmaßnahmen, ein Mittel zum Identifizieren, als dominante Interferenzquellen, aller möglichen Interferenzquellen, die mit dem Interferenzszenario verknüpft sind, welches nach Maßgabe der Klassifizierungsmaßnahmen das wahrscheinlichste Interferenzszenario ist.

**16.** Verfahren nach Anspruch 13, wobei der Demodulator zum Demodulieren des empfangenen Signals zur Wiederherstellung gewünschter Information während des Interferenzausgleichs mit Hilfe der in der Interferenzkarte gespeicherten Information Mittel zur gemeinsamen Demodulierung eines gewünschten Trägers und irgendeiner identifizierten dominanten Interferenzquelle umfasst.

**17.** Verfahren nach Anspruch 15, wobei das System weiterhin umfasst:

ein Änderungssystem zum Schätzen von Information über irgendeine identifizierte dominante Interferenzquelle aufgrund von Information, die während der Demodulierung des empfangenen Signals über alle identifizierten dominanten Interferenzquellen entdeckt wurde; und zum Speichern der Information in der Interferenzkarte.

**Revendications**

**1.** Procédé de démodulation d'un signal reçu, le procédé comprenant :

l'utilisation (500) d'une carte de brouillage contenant une information concernant une pluralité de sources de brouillage candidates ;

l'identification (502) de l'une quelconque des sources de brouillage candidates qui comprennent une source de brouillage dominante basée sur un signal reçu et l'information concernant la pluralité de sources de brouillage candidates ;

la démodulation (504) du signal reçu pour récupérer une information voulue tout en compensant le brouillage à l'aide de l'information stockée dans la carte de brouillage, **caractérisé en ce que** le procédé comprend en outre :

la détermination d'une position où le signal reçu est reçu ;

la détermination d'une position associée à au moins l'une de la pluralité des sources de brouillage candidates ; l'estimation d'une information concernant la, au moins une, de la pluralité des sources de brouillage candidates basée sur la position où le signal reçu est reçu et la position associée à la, au moins une, source de brouillage candidate ; et le stockage de l'information estimée dans la carte de brouillage.

2. Procédé selon la revendication 1, dans lequel l'utilisation d'une carte de brouillage contenant une information concernant une pluralité de sources de brouillage candidates comprend : l'identification d'une pluralité de sources de brouillage candidates ; la génération d'une information concernant les sources de brouillage candidates identifiées ; le stockage de l'information générée dans la carte de brouillage.

3. Procédé selon la revendication 1, dans lequel l'identification de l'une quelconque des sources de brouillage candidates qui comprennent une source de brouillage dominante sur la base du signal reçu et de l'information concernant la pluralité de sources de brouillage candidates comprend : la génération d'une pluralité de mesures de classement associées à une pluralité de scénarios de brouillage, l'identification en tant que sources de brouillage dominantes de toutes sources de brouillage candidates associées au scénario de brouillage que les mesures de classement indiquent comme étant le scénario de brouillage le plus probable.

4. Procédé selon la revendication 1, dans lequel la démodulation du signal reçu pour récupérer une information voulue toute en compensant le brouillage à l'aide de l'information stockée dans la carte de brouillage comprend la démodulation conjointe d'une porteuse souhaitée et de toute source de brouillage dominante identifiée.

5. Procédé selon la revendication 3, dans lequel le procédé comprend en outre : l'estimation d'une information concernant toute source de brouillage dominante identifiée sur la base d'une information révélée concernant des sources de brouillage dominantes identifiées quelconques pendant une démodulation du signal reçu ; et le stockage de l'information dans la carte de brouillage.

6. Procédé selon la revendication 1, dans lequel le procédé comprend en outre : l'identification d'une source de brouillage candidate dans la carte de brouillage qui a été inactive pendant une période spécifiée ; et l'enlèvement, de la carte de brouillage, de l'information associée à la source de brouillage candidate inactive.

7. Procédé selon la revendication 1, dans lequel le procédé comprend en outre : l'identification d'une nouvelle source de brouillage candidate qui n'est pas l'une de la pluralité de sources de brouillage candidates incluses dans la carte de brouillage ; la génération d'une information concernant la nouvelle source de brouillage candidate identifiée ; et le stockage de l'information générée dans la carte de brouillage.

8. Procédé selon la revendication 1, dans lequel l'information concernant la pluralité de sources de brouillage candidates comprend une information concernant un temps relatif d'un signal souhaité et au moins l'une des sources de brouillage candidates.

9. Procédé selon la revendication 1, dans lequel le procédé comprend en outre : l'identification de deux ou plus de deux entrées dans la carte de brouillage correspondant à une seule source de brouillage candidate ; et la fusion de deux ou plus de deux entrées identifiées en une seule entrée.

10. Procédé selon la revendication 1, dans lequel le procédé comprend en outre : un décodage de correction d'erreur du signal reçu démodulé pour produire une estimation d'un signal souhaité ; le traitement du signal reçu pour déterminer des paramètres associés à au moins une source de brouillage ; et le stockage des paramètres déterminés dans la carte de brouillage.

11. Procédé selon la revendication 10, dans lequel le traitement du signal reçu pour déterminer des paramètres associés à au moins une source de brouillage est effectué uniquement si le décodage de correction d'erreur indique que le signal souhaité a été correctement reçu.

**12.** Procédé selon la revendication 10, dans lequel le traitement du signal reçu pour déterminer des paramètres associés à au moins une source de brouillage est exécuté pendant un traitement de fond.

**13.** Système pour démoduler un signal reçu, le système comportant : une carte de brouillage (50) contenant une information concernant une pluralité de sources de brouillage candidates ;

un moyen pour identifier (46) l'une quelconque des sources de brouillage candidates qui comprennent une source de brouillage dominante sur la base d'un signal reçu et de l'information concernant la pluralité de sources de brouillage candidates ;

un démodulateur (48) destiné à démoduler le signal reçu pour récupérer une information voulue tout en compensant un brouillage à l'aide de l'information stockée dans la carte de brouillage, **caractérisé en ce que** le système comporte en outre : un moyen pour déterminer une position où le signal reçu est reçu ;

un moyen pour déterminer une position associée à au moins l'une de la pluralité de sources de brouillage candidates ; un système (60) de mise à jour destiné à estimer une information concernant la, au moins une, de la pluralité de sources de brouillage candidates sur la base de la position où le signal reçu est reçu et de la position associée à la, au moins une, source de brouillage candidate ; et pour stocker l'information estimée dans la carte de brouillage (50).

**14.** Système selon la revendication 13, dans lequel la carte de brouillage contenant une information concernant une pluralité de sources de brouillage candidates comprend : un moyen pour identifier (46) une pluralité de sources de brouillage candidates ; un moyen pour générer une information concernant les sources de brouillage candidates identifiées ; un moyen pour stocker l'information générée dans la carte de brouillage.

**15.** Procédé selon la revendication 13, dans lequel le moyen pour identifier l'une quelconque des sources de brouillage candidates qui comprennent une source de brouillage dominante sur la base du signal reçu et l'information concernant la pluralité des sources de brouillage candidates comporte : un système de classement destiné à générer une pluralité de mesures de classement associées à une pluralité de scénarios de brouillage, un moyen pour identifier en tant que sources de brouillage dominantes toutes sources de brouillage candidates associées au scénario de brouillage que les mesures de classement indiquent comme étant le scénario de brouillage le plus probable.

**16.** Procédé selon la revendication 13, dans lequel le démodulateur destiné à démoduler le signal reçu pour récupérer une information voulue tout en compensant le brouillage à l'aide de l'information stockée dans la carte de brouillage comporte un moyen destiné à démoduler conjointement une porteuse souhaitée et toute source de brouillage dominante identifiée.

**17.** Procédé selon la revendication 15, dans lequel le système comporte en outre : un système de mise à jour destiné à estimer une information concernant toute source de brouillage dominante identifiée sur la base d'une information révélée concernant toutes sources de brouillage dominantes identifiées pendant une démodulation du signal reçu ; et pour stocker l'information dans la carte de brouillage.

FIGURE 1

EP 1 380 116 B1

**FIGURE 2**

FIGURE 3

EP 1 380 116 B1

FIGURE 4

```
                ┌──────────────┐      ┌──────────────┐     ┌──────────────┐
                │   Provide    │      │ Receive Signal│     │Obtain Baseband│
 (Start)───────▶│Interference Map│───▶│     r(t)     │────▶│  Samples rₙ  │
                │     520      │      │     522      │     │     524      │
                └──────────────┘      └──────────────┘     └──────────────┘
```

```
┌──────────────┐     ┌──────────────┐     ┌──────────────┐     ┌──────────────┐
│  Determine   │     │   Classify   │     │    Select    │     │  Demodulate  │
│Classification│────▶│ Interference │────▶│ Demodulation │────▶│   Samples    │
│  Measures    │     │  Scenario    │     │  Algorithm   │     │     532      │
│     526      │     │     528      │     │     530      │     │              │
└──────────────┘     └──────────────┘     └──────────────┘     └──────────────┘
```

```
      ╱╲
     ╱  ╲          ┌──────────────┐
    ╱Joint╲  Yes   │    Update    │
   │ Demod ├──────▶│ Interference │──────▶ (Stop)
    ╲Used?╱        │     Map      │
     ╲534╱         │     536      │
      ╲╱           └──────────────┘
       │No
```

# FIGURE 5

FIGURE 6

EP 1 380 116 B1

AN EXEMPLARY INTERFERENCE MAP STRUCTURE

| | SLOT TIMING OFFSET | FREQUENCY OFFSET | SYNC PATTERN | DVCC |
|---|---|---|---|---|
| INTERFERING SOURCE 1 | -29 3/8 symbols | 58Hz | 2 | 10100100 |
| INTERFERING SOURCE 2 | +113 1/4 symbols | 87Hz | 5 | 01011110 |
| INTERFERING SOURCE 3 | +12 3/4 symbols | -25Hz | 6 | 01011011 |
| INTERFERING SOURCE 4 | -22 7/8 symbols | -125Hz | 1 | 11101110 |
| INTERFERING SOURCE 5 | -113 1/2 symbols | 117Hz | 4 | 10011000 |
| INTERFERING SOURCE 6 | +47 5/8 symbols | -11Hz | 4 | 10111110 |

FIGURE 7